Europäisches Patentamt

European Patent Office

Office européen des brevets

(19)

(11) Veröffentlichungsnummer: **0 128 389**
**B1**

(12) # EUROPÄISCHE PATENTSCHRIFT

(45) Veröffentlichungstag der Patentschrift:
27.04.88

(21) Anmeldenummer: 84105573.4

(22) Anmeldetag: 16.05.84

(51) Int. Cl.⁴: **E 04 D 11/00,** E 04 D 13/04

(54) **Anordnung zum Anstauen von Wasser sowie zum Abführen der eine bestimmte Höhe übersteigenden Wassermenge in einer Vegetationsträgerschicht.**

(30) Priorität: 10.06.83 DE 3321096

(43) Veröffentlichungstag der Anmeldung:
19.12.84 Patentblatt 84/51

(45) Bekanntmachung des Hinweises auf die Patenterteilung:
27.04.88 Patentblatt 88/17

(84) Benannte Vertragsstaaten:
AT BE CH DE FR GB IT LI LU NL SE

(56) Entgegenhaltungen:
DE-A-2 315 574
DE-B-1 658 194
FR-A-804 905
FR-A-1 508 616
FR-A-2 056 438
FR-A-2 472 646
US-A-2 121 789

DEUTSCHE BAUZEITSCHRIFT, Nr. 4, April 1984,
Seiten 497-498,503-506, Bertelsmann Fachverlag,
Gütersloh, DE; R. Hohrmann: "Begrünte
Dachflächen"

(73) Patentinhaber: H. Gilgen Optima- Werke,
Neuwilerstrasse 60, CH- 4104 Oberwil (CH)

(72) Erfinder: Gilgen, Hans, Neuwilerstrasse 60, CH-
4104 Oberwill (CH)

(74) Vertreter: Schmidt- Evers, Jürgen, Dipl.- Ing.,
Patentanwälte Dipl.- Ing. H. Mitscherlich Dipl.-
Ing. K. Gunschmann Dipl.- Ing. Dr.rer.nat. W.
Körber Dipl.- Ing. J. Schmidt- Evers Dipl.- Ing.
W. Melzer Steinsdorfstrasse 10, D-8000 München
22 (DE)

## Beschreibung

Die Erfindung betrifft eine Anordnung zum Anstauen von Wasser sowie zum Abführen der eine bestimmte Höhe übersteigenden Wassermenge in einer Vegetationsträgerschicht, die auf einem von einer Dichtungsschicht bedeckten Untergrund angeordnet ist, mit einer zwischen der Vegetationsträgerschicht und der Dichtungsschicht angeordneten Wurzelschutzbahn, mit einem in dem Untergrund vorgesehenen nach oben offenen Einlaufkanal, mit je einem Abflußloch in der Dichtungsbahn und der Wurzelschutzbahn, die über der Einlaufkanal-Öffnung liegen, mit einem in den Einlaufkanal eingesetzten Rohrstutzen, der außen nächst seinem oberen Rand mit einem tellerartigen Flansch versehen ist, und mit einem in dem Rohrstutzen höhenverstellbar angeordneten Anstaurohr, dessen Außenseite gegen die Innenseite des Rohrstutzens abgedichtet ist.

Eine derartige Anordnung ist Z.B. aus der DE-A-2 315 574 bekannt. Sie findet insbesondere Anwendung für Dachgärten. Bei der bekannten Anordnung ist der das Abflußloch in der Dichtungsschicht umgebende Randbereich mit dem tellerartigen Flansch des Rohrstutzens wasserdicht durch Verkleben oder Verschweissen verbunden. Die Dichtungsschicht ist von einer Dichtungsbahn gebildet. Der das Abflußloch in der Wurzelschutzbahn umgebende Randbereich ist lediglich in den Rohrstutzen eingelegt, so daß eine sichere Befestigung nicht vorliegt. Hinzu kommt, daß sich Wasser, welches sich zwischen der Wurzelschutzbahn und der Dichtungsschicht sammelt, nicht abfließen kann. Dieses Wasser kann beispielsweise kondensierter Wasserdampf sein, der aus dem Gebäude durch die Dichtungs schicht diffundiert. Ferner kann dieses Wasser am Rand der Wurzelschutzbahn von außen eingedrungen sein, z. B. dort, wo die Wurzelschutzbahn an begehbaren Flächen abschließt. Das sich zwischen der Dichtungsschicht und der Wurzelschutzbahn sammelnde Wasser kann beim Umkehrdach für die Wärmedämmung schädlich sein.

Der Erfindung liegt die Aufgabe zugrunde, eine Anordnung der eingangs beschriebenen Art so zu gestalten, daß eine dem technischen Stand entsprechende sichere Befestigung der Wurzelschutzbahn an dem das Abflußloch umgebenden Randbereich gewährleistet ist und ferner ein Abfließen des sich möglicherweise zwischen der Dichtungsschicht und der Wurzelschutzbahn sammelnden Wassers ermöglicht wird.

Die Aufgabe ist erfindungsgemäß dadurch gelöst, daß der Rohrstutzen mit Spiel in dem Einlaufkanal angeordnet ist (schwimmende Anordnung) und daß der tellerartige Flansch des Rohrstutzens wasserdicht mit dem das Abflußloch in der Wurzelschutzbahn umgebenden Randbereich der Wurzelschutzbahn verbunden ist.

Sich zwischen der Wurzelschutzbahn und der Dichtungsschicht sammelndes Wasser kann nunmehr durch den von dem Spiel gebildeten Spalt zwischen dem Rohrstutzen und dem Einlaufkanal in letzteren einlaufen. Dadurch, daß die Wurzelschutzbahn nunmehr mit dem tellerartigen Flansch verbunden ist, ist eine sichere Befestigung des das Abflußloch in der Wurzelschutzbahn umgebenden Randbereiches mit dem tellerartigen Flansch, beispielsweise durch Verkleben oder Verschweißen möglich.

Die erfindungsgemäße Lösung hat zusätzlich den Vorteil, daß die Anstaugarnitur unabhängig von dem Durchmesser des Einlaufkanales in der Unterlage ist. Der Durchmesser des Rohrstutzens wird so gewählt, daß er stets mit Spiel in Einlaufkanäle mit üblichen Durchmessern einsetzbar ist.

Ein weiterer Vorteil ist der, daß mit der Montage der Anstaugarnitur kein Verbinden der üblicherweise als Dichtungsbahn ausgebildeten Dichtungsschicht mit dem tellerartigen Flansch des Rohrstutzens mehr notwendig ist. Die Dichtungsschicht wird normalerweise zeitlich mit Abstand vor der Anstaugarnitur auf der Unterlage angebracht, beispielsweise dann, wenn die Unterlage eine Betondecke eines Gebäudes ist, auf dem ein Dachgarten vorgesehen werden soll. Der Anstausatz kann dann angebracht werden, wenn der Dachgarten aufgebaut wird, wozu auch das Einbauen einer Wurzelschutzbahn gehört.

Im Hinblick auf den vorstehenden Gesichtspunkt ist auch das Nachrüsten eines bereits bestehenden Flachdaches mit der Anstaugarnitur wesentlich einfacher möglich als bisher, was den nachträglichen Aufbau eines Dachgartens erlaubt.

Vorteilhaft ist auch, daß nach wie vor ein stufenloses Verstellen des Anstaurohres möglich ist.

Es sei noch darauf hingewiesen, daß auch eine Anordnung bekannt ist, bei der der Rohrstutzen aus zwei mit teleskopisch ineinandergeschobenen Rohrstücken besteht, die beide einen tellerartigen Flansch aufweisen. Der tellerartige Flansch des im Durchmesser weiteren Rohrstückes ist wie bei der eingangs beschriebenen Anordnung mit der Dichtungsschicht verbunden. Der tellerartige Flansch des im Durchmesser engeren Rohrstückes ist mit der Wurzelschutzbahn verbunden. Das Rohrstück mit dem weiteren Durchmesser sitzt zwar auch mit Spiel in dem Einlaufkanal, damit ist jedoch nicht gewährleistet, daß sich zwischen der Dichtungsschicht und der Wurzelschutzbahn sammelndes Wasser abfließen kann. Hinzu kommt, daß die Anbringung der beiden Rohrstücke zu verschiedenen Gewerken gehören. Das Rohrstück mit dem weiteren Durchmesser wird im Rahmen der Dachdichtungsarbeiten angebracht. Das Rohrstück mit dem engeren Durchmesser wird im Rahmen des Aufbaus des Dachgartens in das Rohrstück mit dem weiteren Durchmesser eingedichtet.

Eine andere Weiterbildung der Erfindung kann darin bestehen, daß zwischen der Außenseite des Anstaurohres und der Innenseite des Rohrstutzens in axialem Abstand zwei elastische Dichtungsringe, vorzugsweise aus Gummi, angeordnet werden. Die Toleranzen werden dabei zweckmäßigerweise so gewählt, daß das Anstaurohr von den Dichtungsringen festgehalten wird, derart, daß nur mit Hilfe eines Spezialwerkzeuges, beispielsweise einem gabelförmigen Werkzeug mit den unteren Rand des Anstaurohres untergreifenden Haken an den Zinkenenden in dem Rohrstutzen nach oben verstellbar ist. Damit wird gewährleistet, daß ein unbefugtes Erhöhen des aufrecht zu erhaltenden Wasserstandpegels nicht oder nur unter erschwerten Umständen möglich ist.

Zweckmäßigerwiese werden die Haken so lang gemacht, daß sie bis oder nahezu bis an die Innenseite des Rohrstutzens vorstehen, damit sie gleichzeitig beim Hochziehen des Anstaurohres die Dichtungsringe festhalten bzw. mitnehmen.

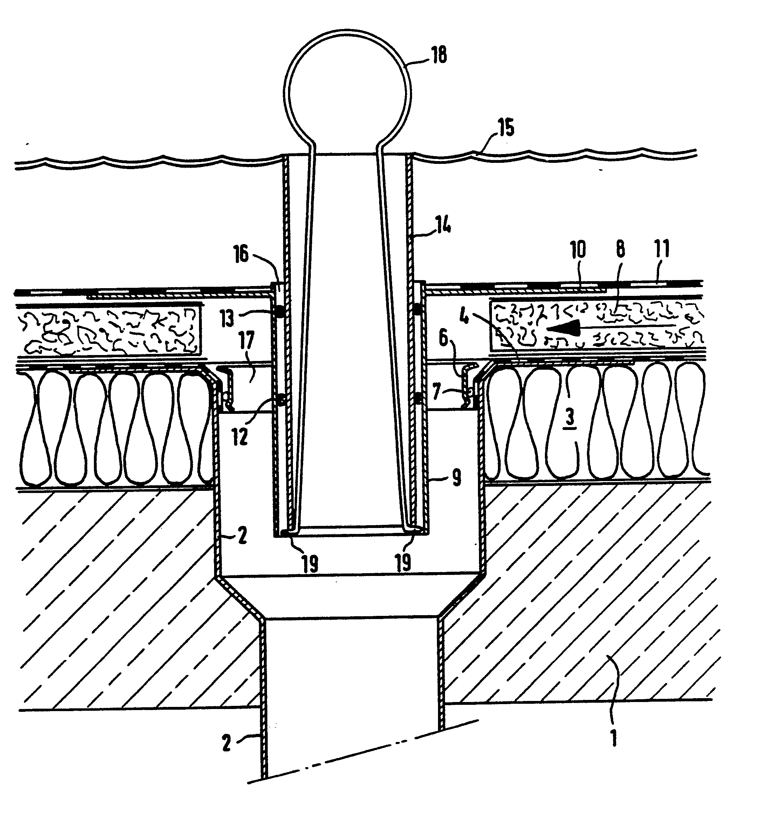

Ein Ausführungsbeispiel der Erfindung wird nachfolgend anhand der Zeichnung beschrieben.

In der Zeichnung ist die Betondecke eines Gebäudes mit 1 bezeichnet. Auf der Betondecke befindet sich eine wärmeisolierende Auflage 3 , z. B. Polystyrol. Die Betondecke 1, die wärmeisolierende Auflage 3, sowie die Dichtungsbahn 4 bilden zusammen eine Unterlage für eine Vegetationsträgerschicht, beispielsweise einen Dachgarten. Die Vegetationsträgerschicht ist hier nicht näher beschrieben. In die Betondecke 1 ist ein Einlaufkanal 2 einbetoniert.

In der Betondecke 1 ist ein Einlaufkanal 2 mit Kragen eingesetzt, der auf der wärmeisolierenden Auflage 3 aufliegt.

Die wärmeisolierende Auflage 3 ist mit einer Dichtungsbahn 4 abgedeckt. Die Dichtungsbahn 4 ist mit einer Einlauföffnung 17 versehen. Der die Einlauföffnung 17 umgebende Randbereich der Dichtungsbahn 4 ist wahlweise in die Öffnung des Einlaufkanales 2 eingelegt und darin durch einen Fixierring 6 sowie einen dazwischengelegten elastischen O-Ring 7 aus Gummi festgehalten, oder direkt mit dem Kragen des Einlaufkanales 2 vollflächig verklebt.

Auf der wasserdichten Dichtungsschicht 4 liegt eine einen mechanischen Schutz bietende Zwischenschicht 8 auf.

In den Einlaufkanal 2 ragt ein Rohrstutzen 9 hinein, der zu der Innenwand des Einlaufkanales 2 einen Abstand hat. Nächst dem oberen Rand des Rohrstutzens 9 ist letzterer mit einem tellerartigen Flansch 10 versehen, der sich von der Außenseite des Rohrstutzens 9 horizontal nach außen erstreckt. Auf der Zwischenschicht 8 liegt ferner eine wurzeldichte Wurzelschutzbahn 11 auf, die mit einem Abflußloch 16 versehen ist. Der das Abflußloch 16 umgebende Randbereich der Wurzelschutzbahn 11 ist mit dem tellerartigen Flansch 10 wasserdicht verbunden, beispielsweise durch Verkleben oder Verschweißen.

In dem Rohrstutzen 9 sitzt ein Anstaurohr 14, das durch zwei Ringdichtungen 12, 13 aus Gummi gehalten wird. Die Halterung ist so stramm, daß ein Verstellen des Anstaurohres 14 nach oben nur mit Hilfe des Spezialwerkzeuges 18 möglich ist. Dieses besteht aus rostfreiem Federstahl und ist gabelförmig ausgebildet. An seinen beiden Zinkenenden 19 befinden sich Haken, mittels welchen der untere Rand des Anstaurohres 14 untergriffen werden kann. Die Haken 19 stehen soweit vor, daß beim Ausziehen des Anstaurohres 14 auch die Ringdichtungen 12, 13 sicher mitgenommen werden. Wenn das Werkzeug 18 nicht benötigt wird, kann es durch Zusammendrücken aus dem Anstaurohr 14 herausgezogen werden.

Über der Wurzelschutzbahn 11 staut sich zur Bewässerung des Dachgartens Wasser an, dessen Oberfläche bzw. Höhe mit 15 bezeichnet ist. Der aufrecherhaltene Pegel wird durch die Höhe des oberen Randes dem Anstaurohres 14 bestimmt.

Die erfindungsgemäße Anordnung ist nicht an den beschriebenen Dachdichtungsaufbau gebunden. Sie kann beispielsweise auch bei Dachdichtungen an Flachdächern verwendet werden, bei denen sich die Dichtungsschicht unter der wärmeisolierenden Auflage erstreckt. Auch bei anderen Flachdachkonstruktionen kann die erfindungsgemäße Anordnung Anwendung finden.

**Patentansprüche**

1. Anordnung zum Anstauen von Wasser sowie zum Abführen der eine bestimmte Höhe (15) übersteigenden Wassermenge in einer Vegetationsträgerschicht, die auf einem von einer Dichtungsschicht (4) bedeckten Untergrund angeordnet ist, mit einer zwischen der Vegetationsträgerschicht und der Dichtungsschicht angeordneten Wurzelschutzbahn (11) mit einem in dem Untergrund vorgesehenen nach oben offenen Einlaufkanal (2), mit je einem Abflußloch (16) in der Dichtungsbahn (4) und der Wurzelschutzbahn (11) die über der Einlaufkanalöffnung (2) liegen, mit einem in den Einlaufkanal (2) eingesetzten Rohrstutzen (9), der außen nächst seinem oberen Rand mit einem tellerartigen Flansch (10) versehen ist, und mit einem in dem Rohrstutzen (9) höhenverstellbar angeordneten Anstaurohr (14), dessen Außenseite gegen die Innenseite des Rohrstutzens abgedichtet ist, dadurch gekennzeichnet, daß der Rohrstutzen (9) mit Spiel in dem Einlaufkanal (2) angeordnet ist, und daß der tellerartige Flansch (10) des Rohrstutzens (9) wasserdicht mit dem das Abflußloch (16) in der Wurzelschutzbahn (11) umgebenden Randbereich der Wurzelschutzbahn (11) verbunden ist.

2. Anordnung nach Anspruch 1, dadurch gekennzeichnet, daß zwischen der Außenseite des Anstaurohres (14) und der Innenseite des Rohrstutzens (9) im axialen Abstand zwei elastische Dichtungsringe (12, 13) vorzugsweise aus Gummi, angeordnet sind.

3. Anordnung nach Anspruch 2, dadurch gekennzeichnet, daß das Anstaurohr (14) von den Dichtungsringen (12, 13) so fest gehalten ist, daß es nur mit Hilfe eines Spezialwerkzeuges, beispielsweise einem gabelförmigen Werkzeug (18) mit dem unteren Rand des Anstaurohres (14) untergreifenden Haken (19) an den Zinkenenden, in dem Rohrstutzen (9) nach oben verstellbar ist.

4. Anordnung nach Anspruch 3, dadurch gekennzeichnet, daß die Haken (19) bis oder nahezu bis an die Innenseite des Rohrstutzens (9) vorstehen.

## Claims

1. An arrangement for retaining water and for draining off water that rises above a predetermined height (15) in a vegetation-bearing layer on a substratum covered by a sealing course (4); having a root protection course (19) located between the vegetation-bearing layer and the sealing layer; an inlet channel (2), open at the top, in the substratum; drain holes (16) in both tile sealing course (4) and the root protection course (11) lying above the opening (2) of the inlet channel; a tubular connecting piece (9) inserted in the inlet channel (2) that is provided with a plate-like flange (10) on the outside next to its upper rim; and a water retaining tube (14) arranged in the tubular connecting piece (9) so that its height can he adjusted and having its outside sealed against the inside of the tubular connecting piece, characterised in that the tubular connecting piece (9) is arranged in the inlet channel (2) with clearance and that the plate-like flange (10) of the tubular connecting piece (9) is connected in a water tight manner with the border region of the root protection course (11) surrounding the drain hole (16) in the root protection course (11).

2. An arrangement according to claim 1, characterised in that two elastic sealing rings (12, 13), preferably of rubber, are arranged spaced apart axially between the outside of the water retaining tube (14) and the inside of the tubular connecting piece (9).

3. An arrangement according to claim 2, characterised in that the water retaining tube (14) is so firmly held by the sealing rings (12, 13) that it can only be adjusted upwards in the tubular support (9) by means of a special too, for example a forked tool (18) having hooks (19) that engage beneath the lower rim of the water retaining tube (14) at the ends of the prongs.

4. An arrangement according to claim 3, characterised in that the hooks (19) project as far as or nearly as far as the inside of the tubular connecting piece (9).

## Revendications

1. Aménagement pour le refoulement des caux ainsi que pour l'écoulement de la quantité d'eau qui surmonte une hauteur (15) déterminée dans une couche végétative, qui est aménagée sur un soubassement recouvert d'un panneau d'étanchéité (4) avec une couche de protection des racines (11) aménagée entre la couche végétative et le panneau d'étanchéité, avec un canal d'entrée (2) prévu, ouvert vers le haut dans le soubassement, avec un orifice d'éoulement (16) dans le panneau d'étanchéité (4) et la couche de protection des racines (11), qui se trouve au-dessus de l'ouverture du canal d'entrée (2), avec une tubulure (9) placée dans le canal d'entrée (2), qui à l'extérieur est pourvu près de son bord supérieur d'une bride (10) en forme de plateau, et d'un tuyau de refoulement (14) dans la tubulure (9), ajustable en heuteur, dont la face externe est rendue étanche contre la face interne de la tubulure, caractérisé en ce que, la tubulure (9) est aménagée avec du jeu dans le canal d'entrée (2), et en ce que la bride en forme de plateau (10) de la tubulure (9) est reliée de façon étanche à l'eau avec la zone de bordure de la couche de protection des racines (11) entourant l'orifice d'écoulement (16) dans la couche de protection des racines (11).

2. Aménagement selon la revendication 1, caracrérisé en ce que, deux anneaux d'étanchéite élastiques (12, 13), de préférence en caoutchouc, sont installés entre la face externe du tuyau de refoulement (14) et la face interne de la tubulure (9), avec un écartement axial.

3. Aménagement selon la revendication 2, caractérisé en ce que, le tuyau de refoulement (14) est maintenu de façon si forte par les anneaux d'étanchéité (12, 13), qu'il ne peut être ajusté vers le haut dans la tubulure (9) qu'avec l'aide d'un outil spécial, par exemple un outil en forme de fourchette (18) avec un crouchet (19) à l'extrémité des dents saisissant par dessous le bord inférieur du tuyau de refoulement (14).

4. Aménagement selon la revendication 3, caracrérisé en ce que, les crochets (19) avancent jusqu'à ou presque jusqu'à la face interne de la tubulure (9).